# EUROPEAN PATENT APPLICATION

(11) **EP 1 835 417 A1**
(43) Date of publication of application: **19.09.2007**
(21) Application number: 06290409.9
(22) Date of filing: 13.03.2006
(51) Int. Cl.: G06F 17/30

(54) **Web service with associated lexical tree**

(71) Applicant: Alcatel Lucent, 75008 Paris (FR)
(72) Inventor: Larvet, Philippe, 91470 Forges Les Bains (FR)
(74) Representative: Brose, Gerhard

(57) **Abstract**

The invention relates to a method, a computer software product, and a network element to mark-up a web service in order to allow finding and retrieving said service via a natural language request.

The method to mark-up a web service in order to allow finding and retrieving said service via a natural language request is described, comprising the steps of deriving and/ or extracting keywords (2, 3, 4) from an existing web service description (1), finding synonyms (6) for the keywords (2, 3, 4), finding associated forms (7) of the keywords (2, 3, 4) and their synonyms (6), generating a linguistic lexical tree (5) comprising at least the extracted keywords (2, 3, 4), their synonyms (6) and their associated forms (7), and associating said lexical tree (5) to the web service.

## Description

The invention relates to a method, a computer software product, and a network element to mark-up (or label or index) a web service in order to allow finding and retrieving said service via a natural language request.

A main focus in the actual development of the Internet and of Internet technologies is the so-called semantic web. The semantic web shall be able to allow an automation of web service interoperation. An objective of the semantic web is to make web pages, web services and the like computer interpretable, so that e.g. the properties, capabilities, interfaces, and effects of web services and the like are encoded in a unambiguous, machine understandable form.

From Mcllraith et a/"Semantic Web Services" IEEE Intelligent Systems 2001, pp.46-53 it is known to use semantic mark-up of web services to create distributed knowledge bases Internet agents can use to populate their local knowledge bases so that they can reason about web services to perform automatic web services discovery, execution, and composition of interaction. Thereby the semantic mark-up provides a declarative, computer-interpretable API for executing services. The semantic mark-up comprises the necessary inputs, the kind of returned information, and how to execute and potentially interact with a specific service automatically. The semantic mark-up uses a narrow, predefined vocabulary. Only by knowing this vocabulary it is possible to find and/or retrieve a web service. Queries or requests, such as queries from applications or other web services or user requests, using another vocabulary than the predetermined vocabulary are not suitable to find or retrieve such a web service. Due to this, it is not possible to use this semantic mark-up e.g. in combination with natural language requests.

According to the state of the art, searching and finding of particular services is only possible if the vocabulary used in the semantic mark-up of the particular web service is used.

In the context of service-oriented architectures providing dynamic service-searching and/or service-discovery in the Internet, the main problem is to find rapidly the right web service to realize a given service, starting from a request that can be expressed by a lambda user in natural language. Thereby two kinds of users are thinkable:

The first kind of thinkable user is a technical user, who aims at building new services by composing existing elementary services. An improvement to do that would be, if the technical user could use a specific service composer comprising a natural-language interface allowing him to find easily proper semantic services that are present in a repository. Thereby a semantic service is a service comprising a suitable semantic description.

The second kind of thinkable user is e.g. an end user of a mobile phone or a PDA and the like, who wants to access a service without knowing the name of the service. An improvement to do that would be, if the end user could enter a natural language request on his preferred terminal. Hereby the problem arises, that this natural language request has to be analyzed by a specific analyzer in order to solve the semantic correspondence between the concepts of the request and the concepts of an adequate semantic service.

Consequently, the technical task hidden by this main problem is to add some specific information to web services - mainly to web services to be built - in order to help their future dynamic discovery performed by natural language requests.

An object of the invention is to develop a method to add specific information to web services, that allows searching and finding of web services by using natural language.

The invention's technical purpose is met by said method to mark-up a web service in order to allow finding and retrieving said service via a natural language request, wherein said method is characterized in the following steps:
- Deriving and/or extracting keywords such as e.g. verbs, nouns, adjectives, prepositions from an existing web service description, such as a technical description like e.g. a Web Service Description Language (WSDL) file, a semantic description like e.g. a DARPA Agent Mark-up Language for Services (DAML-S) file and the like, said keywords comprising e.g. the name of the web service, the kind of service provided, the input and output parameters and the like,
- Finding synonyms for the derived and/or extracted keywords,
- Finding associated forms of the derived and/or extracted keywords and their synonyms,
- Generating a linguistic lexical tree comprising at least the extracted keywords, their synonyms and their associated forms, and
- Associating said lexical tree to the web service, wherein natural language requests are compared with the lexical tree, e.g. in order to decide, if the particular web service fulfils the requirements of the request, or if it does not.

The lexical tree associated to the web service describes the web service in a non-formal, but in a lexical manner. The association of the lexical tree to the web service can be done e.g. by adding a file comprising the lexical tree. The association of the lexical tree and the format of the lexical tree preferably are standardized, wherein the vocabulary used for the keywords, their synonyms and their associated forms preferably do not have to be standardized.

The basic idea of the invention is to associate a linguistic lexical tree to each web service, in order to express in a flexible way the service it can provide and the keywords associated to this service: main action verbs expressing the aim of the service, required data and returned results. Said method according to the invention has the advantage over the state of the art, that by adding a linguistic lexical tree to a web service, finding and retrieving a particular web service is enabled by natural language requests and queries. Thereby, finding and retrieving preferably is done by comparing e.g. a natural language request with the entries of the linguistic tree, wherein it is thinkable that a simple mechanism such as a matching of the wording of the natural language request and the linguistic tree is performed to find an adequate web service.

In a preferred embodiment of said invention, superordinated and/or subordinated terms are derived from the keywords, particularly from the nouns, and are also added to the linguistic tree.

An example for superordinated terms concerns a translation service that is able to translate from English to German, from English to French and from German to French and vice versa. A superordinated term for the keywords 'English', 'French', 'German' are 'language A' or 'first language' and 'language B' or 'second language'. A similar example concerns a web service that allows booking flight tickets from Lufthansa, AirFrance and BritishAerospace. A superordinated term for those keywords is e.g. 'Airline'.

An example for subordinated terms concerns a web service providing car rental in all countries of the European Union. A search request typically will specify the country or at least a city from which it is known in which country it is located. So subordinated terms to the keyword 'European Union' are e.g. 'Great Britain', 'France', 'Germany', 'Spain', 'Portugal', 'Denmark' and so on.

In another preferred embodiment of said invention, the linguistic tree comprises a self learning branch which is supplemented dynamically, so that with an increasing number of requests an increasing number of synonyms and associated forms are found and are added to the linguistic tree.

In an additional preferred embodiment of said invention, a natural language request or a natural language query is compared with the linguistic tree of a particular service in order to decide, if the particular web service fulfils the requirements of a request, or if it does not.

To compare the natural language request with the lexical tree of the web service, it is thinkable that also the natural language request is transformed into lexical trees. Doing so, comparing and matching of the request and the lexical tree of a web service is simplified.

In a particularly preferred embodiment of said invention, the web service description the keywords are derived from comprises a WSDL file. In another particularly preferred embodiment of said invention, the web service description, the keywords are derived from is a semantic mark-up of the web service comprising a DAML-S file.

In an additional particularly preferred embodiment of said invention, the web service description, the keywords are derived from comprises an Web Ontology Language (OWL) file, such as a OWL-S (OWL for Services) file.

In another preferred embodiment of the invention, said method is performed by a computer program product stored on a computer usable medium comprising computer readable program means for causing a computer to perform the method mentioned above, when said computer program product is executed on a computer.

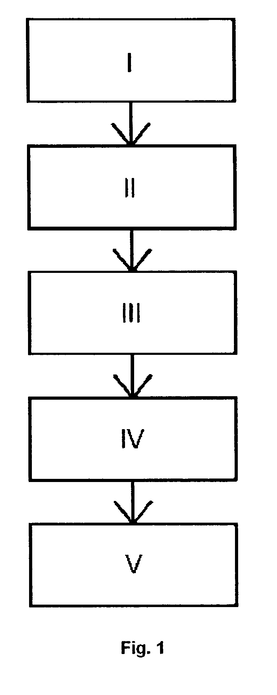

Brief description of the drawings, with
- Fig. 1 showing a scheme of the execution of a method according to the invention,
- Fig. 2 showing a scheme of a linguistic lexical tree derived from an existing description of a web service, and Paths for performing the invention.

A web service typically comprises a WSDL file comprising a technical description of the particular web service. WSDL is a standard of the World Wide Web Consortium W3C. WSDL is a XML (extended Mark-up Language) format to describe formally network services under the form of a set of definitions. The WSDL description for a given web service is always available on the server because this description is automatically built by the server from the external interfaces of the service, as they were defined and written by the original programmer. The WSDL file comprises the name of the service, the name of the operations, and the signature of the operations like e.g. the names and types of the parameters.

Consequently, a WSDL description contains four main parts: the detailed description of the data types (simple and complex) manipulated by the operations of the service; the descriptions of the messages taken for input and output by the operations; the descriptions of the operations (name and exchanged messages);the declaration of the service name.

The objective of a first step I of the method according to the invention is to extract keywords from this web service description, in order to build in a later step a lexical tree based on those keywords. Those keywords can comprise e.g. the significant names of the service, of the operations, of the parameters used by the operations and the like. Very often the programmer of a web service gives significant names, at least clear names, to the operations and parameters. Examples for such clear names are e.g. UserPreferenceService, TranslationService, GetUserProfile, TakeEvent, RemoveLanguage, ConvertAda2Java, and the like. From those names the keywords are derived and/or extracted in the first step 1.

Thereby a specific WSDL lexical analyzer takes in account these names: service name, operation names, data type names and values. The analyzer can expand the names, wherein the analyzer is able to fill incomplete names. For instance, the analyzer is able to complete an operation name 'GetUserProf' to 'GetUserProfile' when finding a 'UserProfile' as a complex data type description. There is a high probability that the intentional name of the operation 'GetUserProf' is 'GetUserProfile'.

With the help of syntactic dictionaries, the analyzer is then able to split the names found in WSDL into elementary words in order to build a meaningful lexical suite i.e. a syntagma. For example the operation name 'GetUserProfile' will become the lexical suite 'get user profile', the name 'setEventSinkURL' will become 'set event sink URL', etc.

By examining the description of the messages, which are, in WSDL, the way to associate input/output data to data type names and operations names, the WSDL analyzer is then able to make the link between the lexical suites discovered during the data types analysis, and the ones corresponding to the operations. This allows to derive and to extract keywords from the WDSL file in the first step. Thereby the principle is the same as above: with the help of a syntactic dictionary, the WSDL labels of the messages are split into elementary words, and only the significant words are kept, i.e. only the nouns, verbs and adjectives.

Those keywords form a first branch of a lexical tree. In a second step II a second branch of the lexical tree is formed by finding lexical equivalences, i.e. synonyms for the keywords. This second branch improves the ability of interaction with natural language requests significant. In a third step III, a third branch of the lexical tree is formed by finding associated forms of the keywords and their synonyms, such as associated verbs and the like. This third branch further improves the ability to handle natural language requests. In a fourth step IV, the lexical tree is generated by merging the three branches of the lexical tree formed in the steps I, II and III.

In a fifth step V the lexical tree is associated to the web service, so that natural language requests can be compared with the lexical tree, e.g. in order to decide, if the particular web service fulfils the requirements of the request, or if it does not.

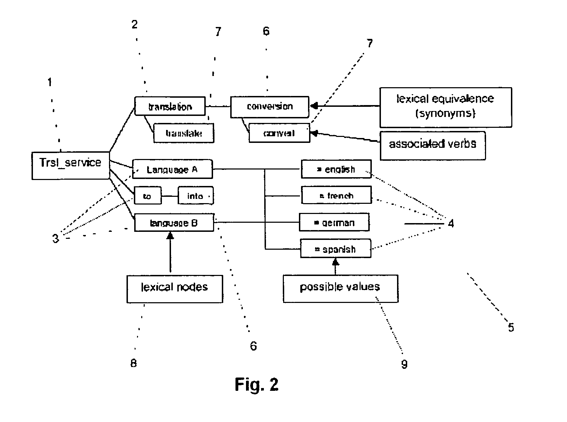

As shown in Fig. 2, a WSDL file 1 describes a translation service 'Trsl_service'. The keyword 2 derived from the name of the web service is 'translation'. From the names of the operations the keywords 3 'language A', 'language B' and 'to' are extracted. From the data type description the keywords 4 'English', 'French', 'German' and 'Spanish' are derived.

The keywords 2, 3 and 4 form a branch of a lexical tree 5 that will be supplemented by a second branch comprising synonyms 6 of the keywords 2, 3, 4 and by a third branch comprising associated forms 7 of the keywords 2, 3 and the synonyms 6. Here, the associated forms 7 are associated verbs. Furthermore it is thinkable to add further branches such as superordinated and/or subordinated terms and their synonyms and/or their associated forms.

The lexical tree 5 comprises lexical nodes 8 that are formed by the keywords 3 extracted from the operation names. Furthermore the lexical tree 5 comprises possible values 9 for the lexical nodes 8. Thereby a lexical node is any node of the lexical tree 5 where synonyms 6, associated forms 7 or possible values 9 can be attached. For example the keywords 2, 3 form lexical nodes, because the keywords 4 - that are possible values 9 of the keywords 3 - can be attached to the keywords 3, and the synonyms 6 and the associated forms 7 can be attached to the keyword 2 and also to some of the keywords 3, like e.g. the synonym 6 'into' to the keyword 3 'to'. Thereby the possible values 9 are the keywords 4 derived from the data type description. Keywords and possible values have the following relationship: A keyword 2, 3, i.e. a concept or a word can be considered as a "class", wherein a possible value 9 is an "instance" of this class. For example, "german" is a possible value of "language", as the number "three" is a possible value of "integer". The keywords and possible values are assigned in the following way to the lexical nodes: the main keywords detected (in Fig. 2 these main keywords are the keywords "translation" 2 and "language" 3), are first attached to the service name, in Fig. 2 the service name "Trsl_service" 1. These main keywords 2, 3 form the lexical nodes 8. Then synonyms are searched and found for those keywords and directly attached to them. A synonym for "translation" is e.g. "conversion". Then associated forms 7 like e.g. derived verbs are associated to the synonyms. Such derived verbs are "translate" and "convert". These derived verbs are given by syntactic or grammatical analyzers that are state of the art. If no derived verb can be associated, and if a second search of synonym leads mainly to the original word without any add of vocabulary richness, then it is considered that no pertinent synonym can be found. In Fig. 2 this is the case for the keyword 3 "language". If no pertinent synonym can be found, possible values 9 are attached to the corresponding lexical node 8. In the example shown in Fig. 2, the lexical nodes 8, no pertinent synonyms can be found for the keywords 3 "language", wherein the possible values 9 are the keywords 4 "english", "german", "french" and "spanish", i.e. the possible values 9 for some keywords derived from a given WSDL file can also be other keywords also derived from the same WSDL file.

The lexical tree associated to the web service describes the web service with its specific keywords in a non-formal, but in a lexical manner. Such web services can be e.g. RSS (Really Simple Syndication) feeds, secured-payment mechanisms, weather information, traffic information, company stock options, and the like.

The object of the invention is to associate linguistic lexical trees to web services, to help e.g. their future dynamic service discovery via natural language requests, but is neither the transformation of natural texts into lexical trees, nor the mechanism for service discovery.

Besides the advantage to allow to find web services by natural language requests, the invention has the following advantages:

The lexical tree associated to a web service is light. It can be made easily by a simple association of keywords, or by the help of a linguistic text analyser, and it can be expressed with only a few kilobytes.

Using a lexical tree is flexible. The lexical tree don't has to have a predefined structure and does not need to conform with steady, inflexible patterns. This is a significant advantage over the state of the art, where the external descriptions of the web services have to be formal and expressed in conformity with non-flexible structured patterns. According to the state of the art, an original request, sent to search an unknown web service, cannot be expressed in natural language. The request has to be expressed under a formal way, with a structured specific language, to be further matched with the formal external description of the web service. According to the invention, it is possible to perform a natural language request without the need of a predefined vocabulary, a structured form of the request and the like.

The matching between the lexical trees of a web service and a natural-language request can be made easily.

The invention is commercially applicable particularly in the field of production and operation of web services to be used in combination with natural language input.

## Claims

1. Method to mark-up a web service in order to allow finding and retrieving said service via a natural language request, the method is **characterized by** comprising the steps of:
Deriving and/ or extracting keywords (2, 3, 4) from an existing web service description (1),
Finding synonyms (6) for the keywords (2, 3, 4),
Finding associated forms (7) of the keywords (2, 3, 4) and their synonyms (6), Generating a linguistic lexical tree (5) comprising at least the extracted keywords (2, 3, 4), their synonyms (6) and their associated forms (7), and Associating said lexical tree (5) to the web service.

2. The method according to claim 1, **characterized in that** superordinated and/or subordinated terms are derived from the keywords (2, 3, 4) and are also added to the linguistic tree.

3. The method according to claim 1 or 2, **characterized in that** the linguistic tree (5) at least comprises a self learning branch which is supplemented dynamically.

4. The method according to one of the previous claims, **characterized in that** in order to decide, if a particular web service fulfils the requirements of a request, or if it does not, a natural language request is compared with the lexical tree (5) of the particular web service.

5. The method according to one of the previous claims, **characterized in that** the web service description the keywords (2, 3, 4) are derived from comprises a WSDL file (1).

6. The method according to one of the previous claims, **characterized in that** the web service description the keywords (2, 3, 4) are derived from a DAML-S file or from an OWL file.

7. A computer program product **characterized by** comprising programming means for causing a computer to perform the method of anyone of the claims 1 to 6, when said computer program product is executed on a computer.

8. A network element **characterized by** comprising a server adapted to perform the method of anyone of the claims 1 to 6.
